# EUROPEAN PATENT SPECIFICATION

(11) **EP 1 030 133 B1**
(45) Date of publication and mention of the grant of the patent: **14.07.2004**
(21) Application number: 99102742.6
(22) Date of filing: 19.02.1999
(51) Int. Cl.: F25B 5/00, F25D 11/02

(54) **Refrigerator appliance combining a fridge compartment and a freezer compartment**
Kühl- und Gefrierfach kombinierende Kühlvorrichtung
Dispositif de refroidissement avec compartiment de réfrigération et de congélation combiné

(43) Date of publication of application: 23.08.2000
(73) Proprietor: Ranco Incorporated of Delaware, Wilmington, Delaware 19801-1612 (US)
(72) Inventor: Rossi, Guglielmo, 76351 Linkenheim (DE); Cerizza, Giovanni, 26900 Lodi (IT)
(74) Representative: HOFFMANN - EITLE

(56) References cited:
- EP-A- 0 246 465
- EP-A- 0 602 371
- DE-A- 3 502 428
- DE-A- 4 020 537
- GB-A- 1 317 365
- US-A- 5 038 827
- US-A- 5 617 815

## Description

The present invention relates to a refrigerator appliance having a fridge compartment and a freezer compartment.

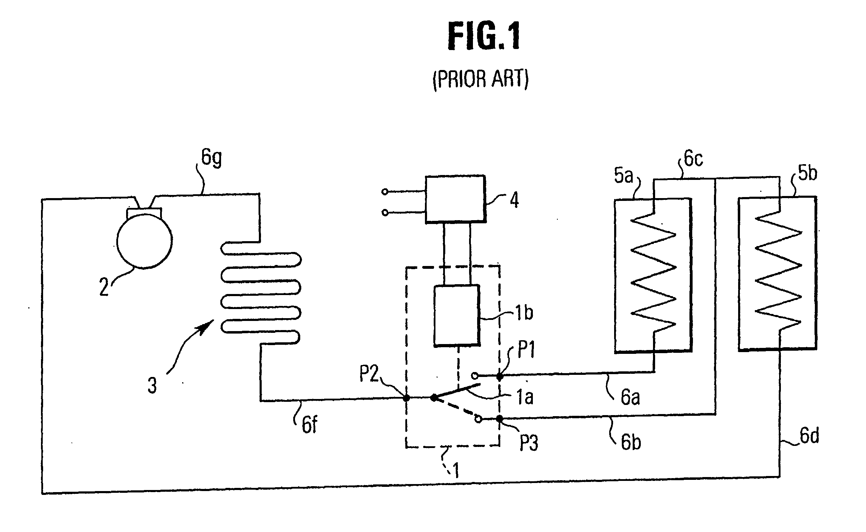

Refrigerator Appliances either for household or commercial application are often designed to provide a freezer compartment and a refrigerator compartment in combination. Such appliance either employs two independent refrigeration circuits with two compressors, or a single refrigeration circuit is provided, with a single compressor and with a solenoid valve for diverting the refridgerant or cooling fluid to meet the cooling demands of the respective compartments. The single compressor solution requires less space, energy and manufacturing costs than a solution with two compressors. A typical refrigerator appliance adopting this single compressor solution is schematically depicted in Fig. 1.

The typical refrigerator appliance depicted in Fig. 1 comprises a single compressor 2, a condensor 3, a first evaporator 5a placed in the fridge compartment and a second evaporator 5b placed in the freezer compartment. Reference numeral 1 denotes a valve for controlling the flow of cooling fluid from said compressor to said first evaporator or to said second evaporator, depending on the actual position of a valve element 1a actuated by an actuating element 1b which typically is a solenoid unit. The current supply to the solenoid unit 1b is controlled by a control unit 4. Reference numerals 6a to 6e denote pipes for interconnecting the elements of the refrigerator circuit shown in Fig. 1. An outlet of compressor 2 is connected by means of a pipe 6g with an inlet of condensor 3. An outlet of condensor 3 is connected through a pipe section 6f with an input port P2 of the solenoid valve 1. A first output port P1 of the solenoid valve 1 is connected through a pipe section 6a with an inlet of the first evaporator 5a. An output port P3 of the solenoid valve 1 is connected through a pipe section 6b with an inlet of a second evaporator 5b. The outlet of the first evaporator 5a is furthermore connected with the inlet of the second evaporator 5b by means of a pipe section 6c. The outlet of the second evaporator 5b is connected with an inlet of compressor 2 through a pipe section 6d.

In Fig. 1, a first operating state of the solenoid valve 1 is indicated by a solid line. In this first operating state, the valve element 1a takes a position to connect the inlet port P2 of the solenoid valve with the outlet port P1 such that the output of the condensor 3 is connected to the first evaporator 5a in the fridge compartment. In this operating state of the solenoid valve, the cooling fluid flows through the first evaporator 5a and the second evaporator 5b back to the compressor 2. The cooling fluid expands in the first evaporator 5a and in the second evaporator 5b connected in series such that in this operating state of the solenoid valve, a cooling effect is achieved both in the fridge compartment and in the freezer compartment as long as the compressor 2 is running.

A second position of the valve element 1a is shown as a dashed line connecting the inlet port P2 with the outlet port P3. In this second operating state, the outlet of the condensor 3 is connected with the inlet of the second evaporator 5b while the inlet of the first evaporator 5a is disconnected. In this operating state, cooling fluid circulated by the compressor 2 exclusively expands in the evaporator 5b in the freezer compartment such that no cooling effect is generated in the fridge compartment when the solenoid valve 1 is in the second operating position.

In the constellation shown in Fig. 1, the solenoid valve can, therefore, selectively insert either a series connection of the first and the second evaporators 5a, 5b into the refrigeration circuit or it can connect only the second evaporator 5b into the refrigeration circuit while excluding the first evaporator 5a.

According to an alternative constellation of a refrigeration circuit not shown in the figure, the inlet of the first evaporator 5a is connected with one of the two outlet ports P1, P3 of the solenoid valve while the inlet of the second evaporator 5b is connected with the other outlet port of the solenoid valve 1. The outlet of the first evaporator 5a and of the second evaporator 5b are connected together and with the inlet of compressor 2. In this alternative constellation, the solenoid valve can selectively connect either the first evaporator 5a or the second evaporator 5b but not both evaporators into the refrigeration circuit.

The typical refrigeration circuit shown in Fig. 1 has the disadvantage that the supply of cooling fluid to the evaporators 5a and 5b does not always corrspond to the actual cooling demand in the associated compartments. The same applies to the alternative constellation described above. The conventional refrigerator circuit is not able to individually provide the appropriate amount of cooling to the fridge compartment and to the freezer compartment depending on the individual cooling demand. In this regard, the cost-effective single compressor solution is, therefore, inferior to the two compressor solution which allows an independent operation or a simultaneous operation of both evaporators according to need. The energy consumption of a conventional refrigerator with a single compressor and a bistable valve as described in Fig. 1, therefore tends to be higher.

Moreover, in operation the compressor 2 pressurizes the cooling fluid in a section of the refrigerator circuit between the outlet of the compressor 2 and expansion capillaries not shown in the drawings, which are located between the condensor 3 and the evaporators. Each time when the compressor is switched on, a substantial amount of running time of the compressor is required for building up this pressure before a cooling effect can be obtained. Again, this results in an increased energy consumption of the refrigerator.

From US 5,038,827 a dual refrigerator system with a shuttle valve is known. Programmable solenoid control valves S1 and S2 are used to control the disposition of the shuttle valve such that either one of the two evaporators in the system is active, or both.

Accordingly, it is the object of the present invention to provide a refrigerator appliance with a fridge compartment a freezer compartment and a cooling circuit with an improved energy efficiency.

According to the present invention, this object is solved as defined in claim 1.

According to the present invention, the valve means for selectively diverting the flow of cooling fluid to the evaporators of the refrigerator appliance with three ports is adapted to take one of at least three different operating states. In a first operating state, a first of said ports is blocked while a second and a third of said ports communicate with each other such that cooling fluid can enter one of the second and the third ports and leave through the other one of the second and the third ports. In a second operating state the third port is blocked and the first and the second port communicate with each other. In a third operating state, all three ports communicate with each other such that cooling liquid can enter the valve through any of the three ports and leave the valve through the remaining two ports.

The term "port" accordingly refers to a terminal of the valve that can operate as an inlet into the valve or as an outlet from the valve. Blocking a port means that cooling fluid can neither enter the port from outside the valve means nor leave the port from inside the valve chamber.

Advantageous embodiments are given in the dependent claims.

Preferred embodiments of the present invention will now be described with reference to the accompanying drawings.
- Fig. 1: shows a refrigeration circuit of a conventional refrigerator appliance having a fridge compartment and a freezer compartment;
- Fig. 2: shows a first embodiment which is not in accordance with the present invention;
- Fig. 3: shows a second embodiment; this embodiment is in accordance with the present invention; and
- Fig. 4: shows a third embodiment; this embodiment is in accordance with the present invention.

Throughout the drawings, corresponding or identical elements have been denoted with identical reference numerals.

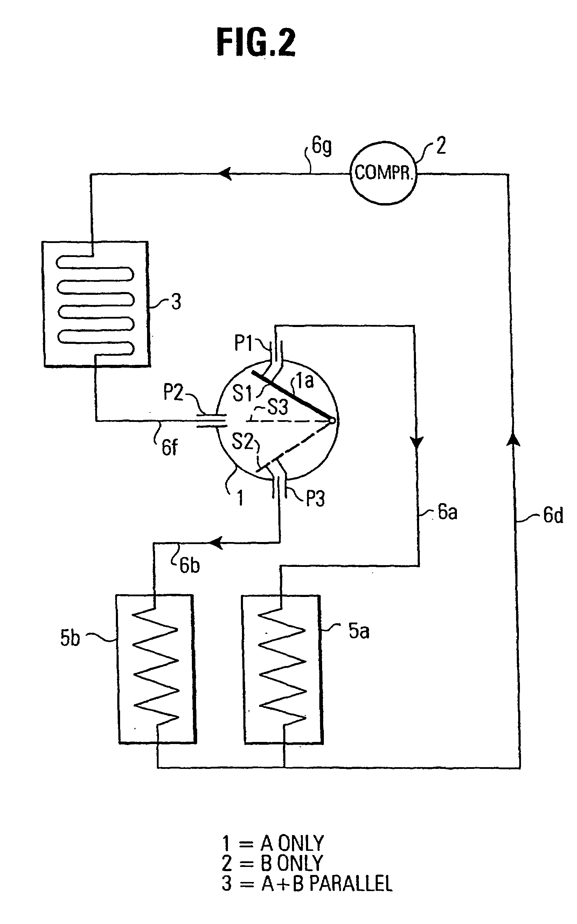

Fig. 2 shows a refrigeration circuit of a refrigerator appliance according to a first embodiment in a schematic manner. Reference numeral 1 in Fig. 2 denotes a valve having three input ports P1, P2 and P3. The valve 1 furthermore has a valve element 1a for selectively interconnecting the three ports of the valve 1. The valve element 1a can take one of three different states denoted S1, S2 and S3. In this embodiment, the port P2 of the valve 1 is connected with an outlet of condensor 3 by means of a pipe 6f. The port P1 acts as an outlet of the valve 1 and is connected through pipe means 6a with an inlet of the first evaporator 5a. Similarly, the port P3 acts as an output and is connected through pipe means 6b with an inlet of the second evaporator 5b. To take one of the three different operating states S1, S2 and S3, the valve 1 can be actuated by solenoid means not shown in Fig. 2. In the first operating state S1, the cooling fluid received by the valve 1 through inlet port P2 from condensor 3, is diverted to outlet port P3 and into evaporator 5b for generating a cooling effect in the freezer compartment only. In this operating state S1, outlet port P1 is blocked by the valve element 1a such that no cooling fluid is received by evaporator 5a in the fridge compartment.

In the second operating state S2 indicated in Fig. 1 by a dashed line, the cooling fluid received through the inlet port P2 is diverted to the outlet port P1 such that it can enter the evaporator 5a in the fridge compartment. In this operating state S2, the outlet port P3 is blocked such that no cooling fluid enters the evaporator 5b in the freezer compartment.

In the third operating state S3 the valve element 1a is located such that both the outlet port P1 and the outlet port P3 can communicate with the inlet port P2. In this operating state, both the outlet port P1 and the outlet port P3 respectively provide cooling fluid to the evaporator 5a and to the evaporator 5b such that a cooling effect is achieved simultaneously in the fridge compartment and in the freezer compartment.

A control unit not shown in the figure, for controlling the operation of the compressor 2 and the valve 1 of this embodiment monitors the temperature in each of the compartments of the refrigerator appliance. If in at least one of the compartments the temperature, for instance the evaporator temperature, has exceeded a preset threshold value, the compressor 2 is switched on. Moreover, depending on whether only the temperature in the fridge compartment, whether only the temperature in the freezer compartment or whether the temperature in both compartments has exceeded respective temperature preset values, the control unit actuates the valve 1 to take the first operating state, the second operating state or the third operating state.

According to this embodiment it is possible to provide cooling to the fridge compartment and to the freezer compartment independently or simultaneously in accordance with the actual cooling demand in these compartments. The operation of a refrigerator according to this embodiment is, therefore, energy-efficient without needing two compressors.

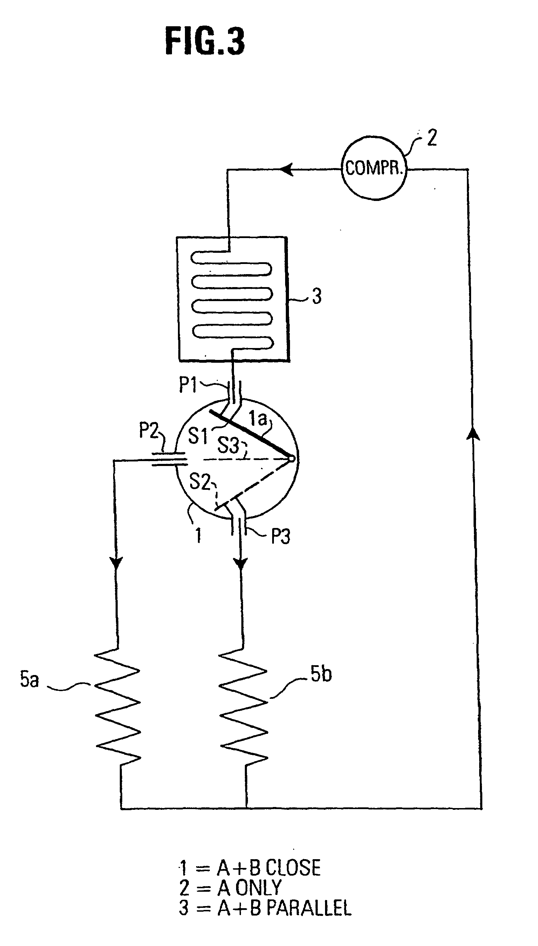

Fig. 3 shows a second embodiment. This embodiment is in accordance with the present invention. Also in this figure, elements identical with or corresponding to elements previously described, are denoted with identical reference numerals.

According to this embodiment, an outlet of compressor 2 is connected through pipe means with an inlet of condensor 3. An outlet of condensor 3 is connected with port P1 of the valve 1. Port P2 of the valve 1 is connected with one of the evaporators of the refrigerator appliance, in this example with evaporator 5a in the fridge compartment. Port P3 of the valve 1 is connected with the other evaporator of the refrigerator, in this example with evaporator 5b in the freezer compartment. The outlets of the evaporators 5a and 5b are connected together and with an inlet of compressor 2.

The valve element 1a of the valve 1 can take three different operating positions S1, S2 and S3. In the first operating position S1, the valve element blocks the port P1 such that cooling fluid can neither enter this port nor exit from this port. In this operating state S1, cooling fluid pressurized by compressor 2 cannot leave the condensor 3 through port P1 since this port is blocked. In this state S1, the ports P2 and P3 of this embodiment can communicate with each other. In this operating state at least one of the ports P2 and P3 may be blocked by the valve element 1a or may be open.

In the second operating state S2 of the valve element 1a, the output port P3 is blocked by the valve element and the ports P1 and P2 can communicate with each other. In this operating state, cooling fluid entering the valve 1 through port P1 exits the valve 1 through port P2 and feeds the evaporator 5a in the fridge compartment of the refrigerator appliance, whereas the evaporator 5b is not connected into the cooling fluid circuit because port P3 is blocked.

In the third operating state S3 the valve element takes a position such that all three ports P1, P2 and P3 of the valve 1 can communicate. In this operating state S3, cooling fluid pressurized by compressor 2 and passing through condensor 3 enters the port P1 of the valve 1 and feeds both the evaporator 5a through the port P2 and the evaporator 5b through the port P3. Accordingly, in this operating state S3 cooling fluid circulates through both evaporators 5a and 5b and a cooling effect is generated in both compartments of the refrigerator appliance when the compressor 2 is running.

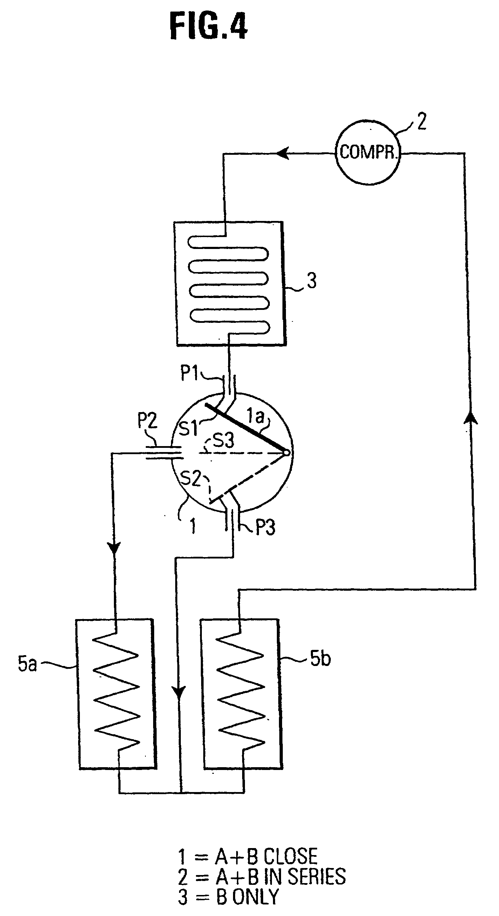

In this embodiment the control means not shown in Fig. 4, for controlling the operation of the compressor 2 and the valve 1 operates as follows.

Whenever sensors in the fridge compartment and in the freezer compartment detect temperatures above respective preset temperature thresholds, the control means activates the compressor 2. If the control means detects that the temperature in the fridge compartment has exceeded the preset temperature threshold for that compartment, the control means activates the compressor 2 and actuates the valve 1 to take the second operating position S2. Whenever the control means detects that the temperature in the freezer compartment exceeds the preset temperature threshold for that compartment, it activates the compressor 2 unless the compressor is already activated and actuates the valve 1 to take the third operating position S3. When both the temperature in the freezer compartment and the temperature in the fridge compartment have fallen below respective lower temperature thresholds, the control means switches off the compressor 2.

According to this embodiment, the control means actuates the valve 1 to take the first operating position S1 whenever the compressor 2 is switched off, in order to avoid that after having switched off the compressor 2, the pressure at the outlet of the compressor decreases. That is, when the compressor 2 is switched off, the control means 1 makes the valve 1 take the operating state S1 in which the inlet port P1 to the valve 1 is blocked by the valve element 1a, to at least partially maintain the pressure generated by the compressor 2 in its preceding operating phase. Preferably, when the control means detects that the cooling demand has been satisfied, the valve 1 is moved into position S1 and then the compressor is swithced off. When the control means detects a new demand for cooling, the valve 1 is moved out of position S1 and then the compressor is switched on. Since there is residual pressure in the condensor when the compressor starts operating, the compressor can immediately initiate a cooling effect. Depending on the interval between the valve leaving the state S1 and the start of the compressor, the pressure on the compressor outlet can be caused to decrease to a value that allows a smooth start of the compressor motor. This decrease of pressure results in an immediate cooling effect at the beginning of the cooling phase, such that the operation of the compressor is energy efficient.

This embodiment is advantageous in that due to the provision of of at least three operating states S1, S2 and S3 of the valve 1 it is possible to control the cooling operating of the evaporators 5a and 5b according to need in the respective compartments, and that furthermore, due to the provision of the operating state S1 blocking the inlet port P1, the pressure generated by the compressor 2 at its outlet during the periods of activity of the compressor 2, can be sustained also during the periods of inactivity of the compressor 2, such that after a restart of compressor 2 less energy is needed for re-establishing the pressure of the cooling fluid which is required for generating a cooling effect in the cooling circuit.

Fig. 4 shows a third embodiment of a refrigerator appliance. This embodiment is in accordance with the present invention. This embodiment differs from the second embodiment in the way how the evaporators 5a and 5b are connected to the valve 1. All elements in Fig. 4 which correspond to or are identical with elements shown in Fig. 3, are denoted with the same reference numerals and the respective explanations of these elements given in connection with Fig. 3 also apply to the embodiment of Fig. 4.

According to the embodiment shown in Fig. 4, the second port P2 is connected with an inlet of the evaporator 5a in the fridge compartment. The outlet of the evaporator 5a is connected with an inlet of the evaporator 5b in the freezer compartment. An outlet of the evaporator 5b is connected with an inlet of the compressor 2. Port P3 of the valve 1 is connected with the inlet of the evaporator 5b.

According to this modification of the embodiment of Fig. 3, in the second operating state S2 of the valve 1 the evaporators 5a and 5b are connected in series into the refrigeration circuit. In this operating state S2, a cooling effect is, therefore, generated both in the freezer compartment and in the fridge compartment whenever the compressor 2 is running.

In the third operating state S3 of this modification shown in Fig. 4, the ports P2 and P3 can communicate with each other such that no pressure difference occurs accross these ports and, therefore, no substantial circulation of cooling fluid will occur in evaporator 5a. In this third operating state, a substantial circulation of cooling fluid occurs through the evaporator 5b only which receives the cooling fluid from port P3. According to this modification, in the first operating state S1 the outlet of the compressor 2 is blocked at port P1 to keep that section of the refrigeration circuit pressurized while the compressor is off. In the second operating state taken when the compressor is running, the evaporators 5a and 5b in both compartments of the refrigerator appliance are operated in series to generate a cooling effect in both compartments. In the third operating state S3 taken when the compressor is running, only the evaporator in the freezer compartment 5b is operated.

In the embodiments previously described, the valve 1 is adapted to take one of three different operating states. The present invention is not limited to a valve having exactly three operating states. According to a modification of the embodiment of Figure 3, the valve 1 is adapted to provide four different operating states. In addition to the three operating states already described in detail in connection with Figure 3, a fourth operating state can be provided. In this operating state, port P2 is blocked while port P1 and port P3 can communicate with each other in order to divert cooling fluid only to the evaporator 5b in the freezer compartment but not to the evaporator 5a in the fridge compartment.

This modification is advantageous in that it can maintain pressure at the outlet of the compressor during phases of inactivity of the compressor, and in that the evaporators in the fridge compartment and in the freezer compartment can be operated individually or simultaneously, in accordance with the actual cooling demand in the respective compartment. This modification is, therefore, particularly energy efficient.

An embodiment of a valve 1 in a refrigerator appliance according to the present invention comprises a valve element and a valve chamber for accommodating the valve element 1a. The valve element 1a and the valve chamber cooperate with each other to connect or block openings in the periphery of the valve chamber, depending on the position of the valve element 1a relative to the valve chamber. The valve element 1a can be a hollow member with openings in its periphery which are located such that depending on the position of the valve element 1a relative to the valve chamber, the openings in the valve chamber are blocked by the valve element 1a or connected through the holes in the valve element 1a, to take the operating states described above. The axial movement of the hollow valve element 1a in the valve chamber can for instance be achieved by means of a mechanism adopting techniques well known from the design of stepper motors. If the valve element and the valve chamber are cylindrical, the valve element can be provided to perform a rotational movement in the alternative to an axial movement.

## Claims

1. A refrigerator appliance having
- a fridge compartment for keeping goods cold at a first temperature, and having a freezer compartment for keeping other goods frozen at a second temperature lower than said first temperature;
- a refrigeration circuit having a compressor (2) for circulating cooling fluid, a condensor (3), a first evaporator associated with said fridge compartment and a second evaporator associated with said freezer compartment;
- valve means (1) having a first port (P1), a second port (P2) and a third port and a valve element (1a) for selectively interconnecting said ports for controlling a flow of said cooling fluid from said compressor (2) to said first evaporator (5a) and to said second evaporator (5b) ;
- pipe means (6) for interconnecting said compressor (2), said evaporators (5a,5b), said condensor (3) and said valve means (1);
- wherein by means of said pipe means (6) said first port (P1) is connected as an input to receive cooling fluid from said condensor (3), said second port (P2) is connected as an output to said first evaporator(5a), and said third port (P3) is connected as an output to said second evaporator (5b); and
- temperature control means (4) for controlling the operation of said compressor (2) and of said valve means (1) in accordance with actual temperatures and target temperatures within said fridge compartment and said freezer compartment;
said valve means being adapted to provide
- a first operating state (S1) for connecting said third port (P3) with said second port (P2) and blocking said first port (P1) ;
- a second operating state for connecting said first port (P1) with said second port (P2) and blocking said third port (P3); and
- a third operating state (S3) for connecting said first port (P1), said second port (P2) and said third port (P3).

2. The refrigerator appliance according to claim 1,
**characterized in that**
- an outlet of said first evaporator (5a) and an outlet of said second evaporator (5b) are connected together and to an inlet of said compressor (2).

3. The refrigerator appliance according to claim 1,
**characterized in that**
- an outlet of said first evaporator (5a) is connected with said inlet of said second evaporator (5b), and an outlet of said second evaporator (5b) is connected to an inlet of said compressor (2).

4. The refrigerator appliance according to claim 2,
**characterized in that**
- said valve means (1) is adapted to provide a fourth operating state for connecting said first port with said third port and for blocking said second port.

## Patentansprüche

1. Kältemaschinen-Vorrichtung, mit:
- einem Kühlfach, um Waren bei einer ersten Temperatur kalt zu halten, und mit einem Gefrierfach, um andere Waren bei einer zweiten Temperatur niedriger als die erste Temperatur gefroren zu halten;
- einem Kältekreislauf mit einem Kompressor (2) zum Zirkulieren eines Kältefluids, einem Verflüssiger bzw. Dampfkondensator (3), einem mit dem Kühlfach verbundenen ersten Verdampfer und einem mit dem Gefrierfach verbundenen zweiten Verdampfer;
- einer Ventileinrichtung (1), die einen ersten Anschluss (P1), einen zweiten Anschluss (P2) und einen dritten Anschluss aufweist, und mit einem Ventilelement (1a) zum gezielten Verbinden der Anschlüsse, um eine Bewegung bzw. einen Fluss des Kältefluids von dem Kompressor (2) zu dem ersten Verdampfer (5a) und zu dem zweiten Verdampfer (5b) zu steuern;
- einer Leitungseinrichtung (6) zum Verbinden des Kompressors (2), der Verdampfer (5a, 5b), des Verflüssigers bzw. Dampfkondensators (3) und der Ventileinrichtung (1);
- wobei mittels der Leitungseinrichtung (6) der erste Anschluss (P1) als ein Eingang angeschlossen ist, um Kältefluid von dem Verflüssiger bzw. Dampfkondensator (3) entgegenzunehmen, der zweite Anschluss (P2) als ein Ausgang zu dem ersten Verdampfer (5a) angeschlossen ist, und der dritte Anschluss (P3) als ein Ausgang an den zweiten Verdampfer (5b) angeschlossen ist; und
- einer Temperatur-Steuereinrichtung (4) zum Steuern des Betriebes des Kompressors (2) und der Ventileinrichtung (1) in Übereinstimmung mit gegenwärtigen Temperaturen und Solltemperaturen innerhalb des Kühlfaches und des Gefrierfaches;
wobei die Ventileinrichtung ausgelegt ist, um
- einen ersten Betriebszustand (S1) zum Verbinden des dritten Anschlusses (P3) mit dem zweiten Anschluss (P2) und zum Sperren des ersten Anschlusses (P1) bereitzustellen;
- einen zweiten Betriebszustand zum Verbinden des ersten Anschlusses (P1) mit dem zweiten Anschluss (P2) und zum Sperren des dritten Anschlusses (P3) bereitzustellen; und
- einen dritten Betriebszustand (S3) zum Verbinden des ersten Anschlusses (P1), des zweiten Anschlusses (P2) und des dritten Anschlusses (P3) bereitzustellen.

2. Kältemaschinen-Vorrichtung nach Anspruch 1,
**dadurch gekennzeichnet, dass**
- ein Auslass des ersten Verdampfers (5a) und ein Auslass des zweiten Verdampfers (5b) miteinander und mit einem Einlass des Kompressors (2) verbunden sind.

3. Kältemaschinen-Vorrichtung nach Anspruch 1,
**dadurch gekennzeichnet, dass**
- ein Auslass des ersten Verdampfers (5a) mit dem Einlass des zweiten Verdampfers (5b) verbunden ist, und ein Auslass des zweiten Verdampfers (5b) mit einem Einlass des Kompressors (2) verbunden ist.

4. Kältemaschinen-Vorrichtung nach Anspruch 2,
**dadurch gekennzeichnet, dass**
- die Ventileinrichtung (1) ausgelegt ist, um einen vierten Betriebszustand zum Verbinden des ersten Anschlusses mit dem dritten Anschluss und zum Sperren des zweiten Anschlusses bereitzustellen.

## Revendications

1. Réfrigérateur comportant
- un compartiment de réfrigération destiné à maintenir des denrées froides à une première température, et comportant un compartiment de congélation destiné à maintenir d'autres denrées congelées à une seconde température inférieure à ladite première température,
- un circuit de réfrigération comportant un compresseur (2) destiné à faire circuler un fluide de refroidissement, un condenseur (3), un premier évaporateur associé audit compartiment de réfrigération et un second évaporateur associé audit compartiment de congélation,
- un moyen de clapet (1) comportant un premier orifice (P1), un second orifice (P2) et un troisième orifice et un élément de clapet (1a) destiné à interconnecter sélectivement lesdits orifices pour commander la circulation dudit fluide de refroidissement depuis ledit compresseur (2) vers ledit premier évaporateur (5a) et vers ledit second évaporateur (5b),
- un moyen de tuyau (6) destiné à relier mutuellement ledit compresseur (2), lesdits évaporateurs (5a, 5b), ledit condenseur (3) et ledit moyen de clapet (1),
- où au moyen dudit moyen de tuyau (6), ledit premier orifice (P1) est relié en tant qu'entrée pour recevoir le fluide de refroidissement provenant dudit condenseur (3), ledit second orifice (P2) est relié en tant que sortie vers ledit premier évaporateur (5a), et ledit troisième orifice (P3) est relié en tant que sortie vers ledit second évaporateur (5b), et
- un moyen de commande de température (4) destiné à commander le fonctionnement dudit compresseur (2) et dudit moyen de clapet (1) conformément aux températures réelles et aux températures cibles à l'intérieur dudit compartiment de réfrigération et dudit compartiment de congélation,
ledit moyen de clapet étant conçu pour fournir
- un premier état de fonctionnement (S1) destiné à relier ledit troisième orifice (P3) audit orifice (P2) et bloquer ledit premier orifice (P1),
- un second état de fonctionnement destiné à relier ledit premier orifice (P1) audit second orifice (P2) et bloquer ledit troisième orifice (P3), et
- un troisième état de fonctionnement (S3) destiné à relier ledit premier orifice (P1), ledit second orifice (P2) et ledit troisième orifice (P3).

2. Réfrigérateur selon la revendication 1,
**caractérisé en ce que**
- une sortie dudit premier évaporateur (5a) et une sortie dudit second évaporateur (5b) sont reliées ensemble et à une entrée dudit compresseur (2).

3. Réfrigérateur selon la revendication 1,
**caractérisé en ce que**
- une sortie dudit premier évaporateur (5a) est reliée à ladite entrée dudit second évaporateur (5b), et une sortie dudit second évaporateur (5b) est reliée à une entrée dudit compresseur (2).

4. Réfrigérateur selon la revendication 2,
**caractérisé en ce que**
- ledit moyen de clapet (1) est conçu pour fournir un quatrième état de fonctionnement destiné à relier ledit premier orifice audit troisième orifice et destiné à bloquer ledit second orifice.
